# EUROPEAN PATENT SPECIFICATION

(11) **EP 0 498 086 B1**
(45) Date of publication and mention of the grant of the patent: **21.09.1994**
(21) Application number: 91202559.0
(22) Date of filing: 02.10.1991
(51) Int. Cl.: C02F 1/48

(54) **Device that demineralizes water by magnetization**
Vorrichtung zur Entmineralisierung von Wasser durch Magnetisierung
Dispositif de déminéralisation de l'eau par magnétisation

(30) Priority: 04.02.1991 IT MI910268; 27.06.1991 IT MI911763
(43) Date of publication of application: 12.08.1992
(73) Proprietor: E.B.I. DI PASSONI GIOCONDO & C. SAS, I-20040 Cambiago (MI) (IT)
(72) Inventor: Passoni, Giocondo, I-20040 Cambiago (MI) (IT)
(74) Representative: de Pasquale, Carlo

(56) References cited:
- PATENT ABSTRACTS OF JAPAN, vol. 14, no. 417 (C-756)[4360], 10th September 1990;& JP-A-02 160 092 (MINORU MATSUNAMI) 20-06-1990
- PATENT ABSTRACTS OF JAPAN, vol. 14, no. 330 (C-741), 16th July 1990;& JP-A-02 119 990 (TAIRA YOKOZAWA) 08-05-1990

## Description

As is known, water contains numerous dissolved mineral salts, such as magnesium, silica, sodium, chlorine, and particularly calcium salts in greater and smaller quantities.

When there is an especially high quantity of calcium salts, water is classified as 'hard'.

It is also known that when water is heated, the mineral crystals dissolved in it tend to become deposited on the walls of the container or tubing containing the water, thereby seriously damaging them.

Currently, in order to avoid these deposits forming, descaling systems are used that are based on ion exchanging resins, or, as is the case with domestic appliances such as washing-machines and dishwashers, substances are added that hold the calcium salts and other minerals in the water in suspension and thus prevent them from being deposited on the walls of the machine or on the items being washed.

It is further known that by subjecting a current of water to the action of a magnetic flow, the water is magnetized, and under the action of magnetic force, the mineral crystals it contains are directed along a single axis in the direction the water is flowing and lose all motion in the other two possible axes, and thus flow in and out of the container without adhering to its walls.

It is also known that once water has been subjected to the action of a magnetic force, it retains the state induced for a considerable length of time (four to five days).

Lastly, it is also known that magnetized water has notable bio-therapeutic properties, particularly aiding the drainage of the body, and has a benificial action on the general equilibrium of the human organism.

It would seem that the particular benificial characteristics of some spa waters can be attributed to magnetization, as the waters in question pass close to large magnetized masses near their springs.

As a considerable degree of magnetic force is required to magnetize water, the construction of such devices on an industrial scale for domestic or industrial use until now required the use of extremely powerful magnets which are heavy, bulky, and expensive.

As is the object of the present invention, it has been found that if water is passed through a non magnetizable tube (i.e.) copper and subjected, in addition to the effect of a magnetic field due to a series of magnets arranged on either side of the tube, to a kind of inductive catalyser consisting of a thin layer of micronized sulphur powder in a thin plastic envelope, the effect on the water is increased approximately tenfold, which means that the same effect can be achieved as with a magnet that is around thirty times larger and sixty times more expensive.

It has therefore been found that, for example, a device constructed according to the invention fitted with magnets with a total of as little as 16,0000 Gauss is capable of magnetizing a flow of water passing at a pressure of 5 to 6 bar in an 8 mm diameter tube.

Further testing and experimentation has been carried out by the same inventor, and form also the object of the present invention, demonstrating that the efficiency of the device is further improved by aproximately 15% if the aforementioned inductive catalyser is formed of a mixture of equal parts of sulphur, ion exchanging resin, silica phosphate, and magnesium oxide, as opposed to being solely of sulphur.

It has also been discovered that the efficiency of the device can be further enhanced by approximately 10% if the non-magnetizable metal tube has a square section instead of circular, as a consequence of the fact that for an equal size external perimeter the magnets are closer to the center of the tube, and there is improved flow action emitted by the magnets on the liquid that runs through the tube 15 as well as a subsequent improvement in the efficiency of the device.

The invention can be better understood from the following description of one example of the way the device can be constructed, given solely as an example and in no way self-limiting, and illustrated by the attached drawings, in which:
Figure 1 is a horizontal cross section of the device according to the invention;
Figure 2 is a lengthwise cross section of the device according to the invention;
Figure 3 is a transverse cross-section of the device according to the invention;
Figure 4 is a lengtwice cross-section of an improved version of the device according to the invention;
Figure 5 is a transverse cross-section of figure 4.

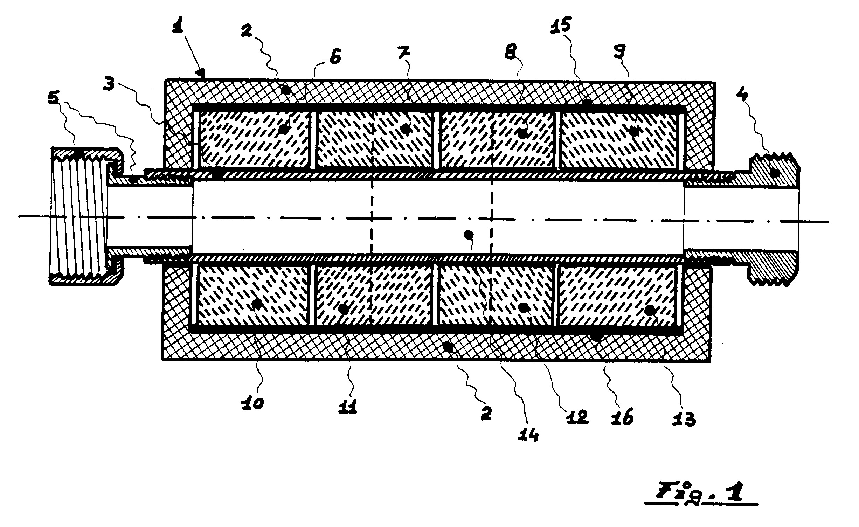

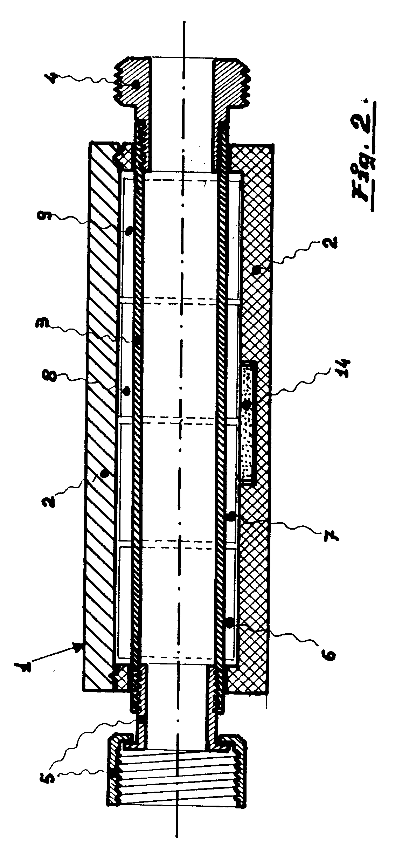

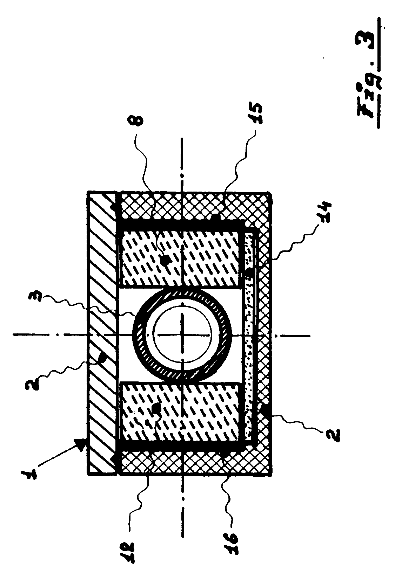

With reference to the above figures 1, 2, and 3, the device (1) according to the invention consists of a container (2) made of a dielectric material such as ABS or a similar plastic, in the centre of which is placed a non-magnetizable metal tube (3) made for example, of copper and of a suitable diameter and length, the former dimension depending on the desired flow rate and the latter dimension on the size and power of the magnets used in the device to magnetize the aforementioned desired flow rate of water.

There are two pipe fittings, one male (4) and one female (5) at the points at which the tube (3) projects from the container (2), that are used to connect the device to the water distribution pipe network.

There are a certain number of permanent magnets of a known type but of good quality and high potential, so as to reduce their bulk to a minimum, placed along and against the side walls of the tube (3), which are heat resistant up to at least 80°C as the device may be used on a hot water pipe, and are numbered 6, 7, 8, 9, 10, 11, 12, and 13 in the attached figures.

The device is completed by the inductive catalyser (14) according to the invention, consisting of an envelope of Micronized sulphur of a thickness of approximately 1 to 2 mm. and a length of approximately 80 to 100 mm. placed above or below the tube and the magnets in correspondence with the point at which the two central magnets are separated.

It has been found that the performance of the device can be further improved if two sheet steel strips (15 and 16) that are designed to prevent the magnetic flow being dispersed towards the exterior and direct it entirely towards the interior of the tube in which the water flows, are placed between the component magnets of the device and the external wall of the casing (2) containing them.

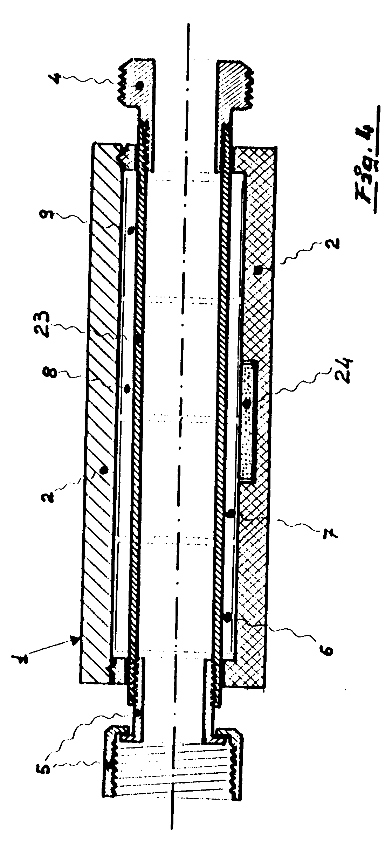

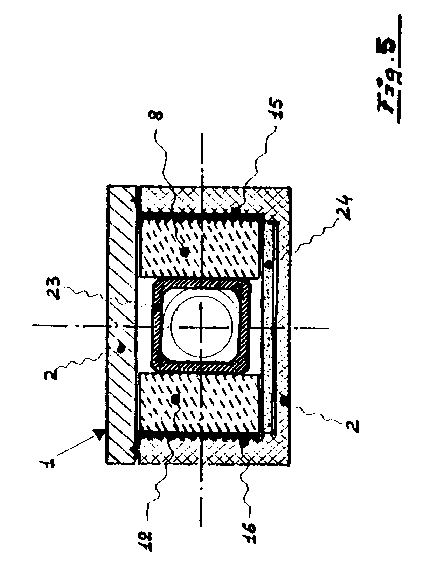

With reference to the figures 4 - 5, the device (1) according to the improved version of the invention, described in the previous example, consists of a container (2) made of a dielectric material such as ABS or a similar plastic, in the centre of which is placed a non-magnetizable metal tube (23) that is square in section, made for example of copper, and of a suitable section and length, the former dimension depending on the desired flow rate and the latter dimension on the size and power of the magnets used in the device to magnetize the aforementioned desired flow rate of water.

There are two pipe fittings, one male (4) and one female (5) at the points at which the tube (23) projects in circular section from the container (2), that are used to connect the device to the water distribution pipe network.

There are a certain number of permanent magnets of a known type but of good quality and high potential, so as to reduce their bulk to a minimum, placed along and against the side walls of the tube (23), which are heat resistant up to at least 80°C as the device may be used on a hot water pipe, and are numbered 6, 7, 8, 9, 10, 11, 12, and 13 in the example shown in the attached figures.

The device is completed by the inductive catalyser (24) according to the improved invention, consisting of an envelope of a thickness of approximately 2 to 3 mm. and containing a mixture of equal parts of pure suphur, ion exchanging resin, silica phosphate, and magnesium oxide, and placed above or below the tube and the magnets in correspondence with the point at which the two central magnets are separated.

As in the previous example, the performance of the device is further improved if two sheet steel strips (15 and 16) that are designed to prevent the magnetic flow being dispersed towards the exterior and direct it entirely towards the interior of the tube in which the water flows are placed between the component magnets of the device and the external wall of the casing (2) containing them.

Using these two refinements an improvement in efficiency of approximately 25% is obtained.

It has also been found that the magnetized water produced by a device constructed according to the invention not only prevents scale from being deposited on the walls of the piping and/or appliance using the water (a water heater, washing machine, or dishwasher, as far as domestic appliances are concerned), but in time also promotes the descaling of these items by removing the scale previously deposited on them.

It remains to say that the device constructed according to the invention can be fitted to the inflow of a water system, that of an apartment or building for example, where the system has non-magnetizable pipes, made of copper for example, whilst where the system uses steel, and therefore magnetizable piping, the device must be fitted between the water supply taps and the appliances that use it, safe in the case the length of the magnetizable piping from the installation point to the last utility is less than fifteen to twenty metres, the approximately loosing in efficiency being in the case only of 15%.

## Claims

1. Water demineralizing device by magnetization consisting of a container (2) made of a dielectric material, such as ABS or a similar plastic, in the centre of which is placed a non-magnetizable metal tube (3), made for example of copper, characterized by a series of permanent magnets (6, 7, 8, 9, 10, 11, 12, and 13) placed along and against the side walls of the tube (3) which supply the force magnetizing the water and by an inductive catalyser (14) formed of a thin strip of Micronized sulphur powder contained in a thin plastic envelope placed above or below the tube and the magnets in correspondence with the point at which the two central magnets are separated.

2. Device as in Claim 1, characterized in that there is a steel sheet plate between each side of the magnets used in the device and the external wall of the casing (2).

3. Device as in Claims 1 or 2 characterized in that the inductive catalyser is formed of a thin strip of a mixture of equal parts of suphur, ion exchanging resin, silica phosphate, and magnesium oxide are used as an inductive catalyser (24) instead of sulphur only.

4. Device as in Claim 3, characterized by the fact that the non- magnetizable metal tube (23) is square in section.

## Patentansprüche

1. Vorrichtung zur Entmineralisierung Von Wasser durch Magnetisierung, bestehend aus einem Behälter (2) aus dielektrischem Werkstoff, wie ABS oder einem ähnlichen Kunststoff, in dessen Zentrum sich ein nicht-magnetisierbares Metallrohr (3) befindet, das zum Beispiel aus Kupfer hergestellt ist, gekennzeichnet durch eine Reihe von Dauermagneten (6, 7, 8, 9, 10, 11, 12 und 13), die entlang dem Metallrohr (3) gegen dessen Außenwand angeordnet sind und die das das Wasser magnetisierende magnetische Feld erzeugen, und durch einen induktiven Katalysator (14), gebildet aus einem dünnen Streifen aus feinstgemahlenen Schwefelpulver, das in einer dünnen Kunststoffhülle enthalten ist, die oberhalb oder unterhalb des Rohres und der Magneten angeordnet ist, in Übereinstimmung mit dem Punkt, an dem die zwei mittleren Magneten getrennt sind.

2. Vorrichtung wie unter Anspruch 1), die dadurch gekennzeichnet ist, daß sich auf jeder Seite eine Stahlblechplatte zwischen den Magneten, die in der Vorrichtung verwendet werden, und der Außenwand des Behälters (2) befindet.

3. Vorrichtung wie unter Anspruch 1 oder 2, die dadurch gekennzeichnet ist, daß der induktive Katalysator (24) aus einem dünnen Streifen besteht, der anstatt nur aus Schwefel aus einer Mischung mit gleichen Teilen Schwefel, Kunstharzlonenaustauscher, Siliziumphosphaten und Magnesiumoxiden besteht.

4. Vorrichtung wie unter Anspruch 3), die dadurch gekennzeichnet ist, daß das nicht-magnetisierbare Metallrohr (23) einen quadratischen Querschnitt aufweist.

## Revendications

1. Dispositif de déminéralisation de l'eau par magnétisation composé d'un conteneur (2) fabriqué dans un matériau diélectrique, comme l'ABS ou un plastique similaire, dans le centre duquel est placé un tube en métal non-magnétisable (3), réalisé par exemple en cuivre, caractérisé par une série d'aimants permanents (6, 7, 8, 9, 10, 11, 12 et 13) placés le long contre les parois latérales du tube (3) qui fournissent la force qui magnétise l'eau et par un catalyseur inductif (14) formé d'une fine bande de poudre de soufre micronisée contenue dans une enveloppe en plastique fine placée sur ou sous le tube et les aimants à la hauteur du point où les deux aimants centraux sont séparés.

2. Dispositif similaire à celui de la revendication 1, caractérisé par la présence d'une tôle d'acier entre chaque côté des aimants utilisés dans le dispositif et la paroi extérieure du carter (2).

3. Dispositif similaire à ceux des revendications 1 et 2 caractérisé par le fait que le catalyseur inductif soit formé d'une fine bande d'un mélange de parts égales de soufre, résine échangeuse d'ions, phosphate de silicium et oxyde de magnésium utilisés en tant que catalyseur inductif (24) au lieu du soufre seul.

4. Dispositif similaire à celui de la revendication 3, caractérisé par le fait que le tube en métal non-magnétisable (23) soit de section carrée.
